# EUROPÄISCHE PATENTANMELDUNG

(11) **EP 2 465 803 A1**
(43) Veröffentlichungstag der Anmeldung: **20.06.2012**
(21) Anmeldenummer: 10195173.9
(22) Anmeldetag: 15.12.2010
(51) Int. Cl.: B66B 1/24

(54) **Energieeffiziente Aufzugsanlage**

(71) Anmelder: Inventio AG, 6052 Hergiswil NW (CH)
(72) Erfinder: Villa, Valerio, 22020, Gironico (IT)
(74) Vertreter: Blöchle, Hans

(57) **Zusammenfassung**

Die Erfindung betrifft ein Aufzugsanlage zum Betreiben einer eine Steuereinheit (SE) und mindestens eine Aufzugskabine (AK) umfassende Aufzugsanlage in einem Gebäude mit mehreren Stockwerken (F), wobei die Aufzugskabine (AK) zwischen den mehreren Stockwerken (F) vertikal verfahren wird, wobei auf mindestens zwei Stockwerken (F) eine Aufzugsbedieneinheit (ABE) angeordnet wird, wobei in mindestens eine der auf den mindestens zwei Stockwerken (F) angeordneten Aufzugsbedieneinheit (ABE) eine Fahrtanfrage (R1, R2, R3) eingegeben und an die Steuereinheit (SE) übermittelt wird, wobei entweder durch die Eingabe in die Aufzugsbedieneinheit (ABE) oder durch eine Eingabe in eine die Eingabe zur Steuereinheit (SE) übermittelnde Bedieneinheit (BE) in der Aufzugskabine (AK) ein Zielstockwerk (Z1, Z2) definiert wird, wobei von der Steuereinheit (SE) das mindestens eine eingegebene Fahrtziel (Z1, Z2) und die mindestens eine eingegebene Fahrtanfrage (R1, R2, R3) mittels eines Sammelbetrieb-Modus ausgeführt werden. Erfindungsgemäss wird von der Steuereinheit (SE) jeweils mindestens ein Energieverbrauchswert der Aufzugsanlage für die Anfahrt von einem derzeitigen Haltestockwerk (F, Z1, Z2, R1, R2, R3) der Aufzugskabine (AK) zu jeweils dem mindestens einen eingegebenen Ziel- (Z1, Z2) und jeweils zu dem mindestens einen eingegebenen Fahrtanfragestockwerk (R1, R2, R3) ermittelt. Es wird dasjenige Ziel- (Z1, Z2) oder Fahrtanfragestockwerk (R1, R2, R3) angefahren, bei welchem der mindestens eine Energieverbrauchswert der Aufzugsanlage minimal ist.

## Beschreibung

Die Erfindung betrifft ein Verfahren zum Betreiben einer eine Steuereinheit und mindestens eine Aufzugskabine umfassende Aufzugsanlage in einem Gebäude mit mehreren Stockwerken.

EP1876129A1 beschreibt ein Verfahren zum Vermindern des Energieverbrauchs einer Aufzugsanlage. Dabei wird die Aufzugsanlage alternativ in einen Operations-Modus oder in einen Stand-by-Modus gebracht. Der höchste Energieverbrauch tritt im Operations-Modus auf, während der Energieverbrauch im Stand-by-Modus niedriger ist. Mit Erfassungsmitteln wird ein Benutzungskriterium der Aufzugsanlage, wie eine Präsenz eines Passagiers in einer Aufzugskabine erfasst. Auch werden Stand-by-Kriterien wie Zeitspannen mit geringem Verkehrsaufkommen festgelegt. Solange die Stand-by-Kriterien nicht erfüllt sind, wird die Aufzugsanlage im Operations-Modus belassen. Sobald die Stand-by-Kriterien erfüllt sind und das Benutzungs-Kriterium nicht erfüllt ist, wird die Aufzugsanlage in den Stand-by-Modus gebracht.

In der Ausgabe 3/2010 des Lift Reports diskutieren José Alberto Roig, Ana Lorente, Agustin Chiminelli und José Luis Núñez in dem Artikel "Bewertung der Umweltverträglichkeit von Aufzügen im Laufe ihrer Nutzungsdauer" über Möglichkeiten zur Senkung des Energieverbrauchs von Aufzugsanlagen. Dabei werden u. a. Verfahren zur Messung bzw. Ermittlung des Energieverbrauchs bzw. von Energieverbrauchswerten von Aufzugsanlagen beschrieben.

In der Zusammenfassung des Schlussberichts "Energieverbrauch und Einsparpotenziale bei Aufzügen" von Jürg Nipkow der Schweizerischen Agentur für Energieeffizienz S.A.F.E (herunterladbar unter www.electricity-research.ch) mit der Publikationsnummer 250057 beschreibt der Autor die Ergebnisse aus einem Ende 2005 abgeschlossenen Forschungsprojektes. Dabei werden verschiedene Energiesparmöglichkeiten bei Aufzügen diskutiert.

Die WO 2010/086290 A1 beschreibt ein Verfahren zum energiesparenden Betrieb einer Aufzugsanlage, wobei ein Energieverbrauch von mindestens einem Energieverbraucher der Aufzugsanlage erfasst wird, mindestens eine Verkehrssituation der Aufzugsanlage erfasst wird, für den erfassten Energieverbrauch und die erfasste Verkehrssituation mindestens ein Energieverbrauchswert ermittelt wird und der ermittelte Energieverbrauchswert auf mindestens einem Ausgabemittel ausgegeben wird.

Bislang wird versucht, den Energieverbrauch einer Aufzugsanlage durch neue bzw. verbesserte Komponenten einer Aufzugsanlage zu senken, was zu höheren Kosten für die Betreiber einer Aufzugsanlage führt. Eine weitere Möglichkeit zur Senkung des Energieverbrauchs von Aufzugsanlagen besteht darin, dass die Aufzugsanlage bei Nicht-Benutzung in einem Warte-Modus (Stand-by-Modus) gebracht wird. Dies bedeutet, dass zum Beispiel überflüssige Beleuchtung, Anzeigen, Bedieneinheiten oder andere Aufzugskomponenten vorübergehend abgeschaltet werden. Erfolgt eine Fahrtanfrage, erwacht die Aufzugsanlage und führt die Aufzugsfahrt aus, jedoch ohne den Energieverbrauch der Aufzugsfahrt zu berücksichtigen. Der Warte-Modus bei Aufzugsanlagen kann den Nachteil haben, dass die Zeitspanne zwischen Warte-Modus und Betriebsbereitschaft der Aufzugsanlage verhältnismässig lange sein kann.

Eine Aufgabe der Erfindung ist es, eine weitere Möglichkeit für eine kosteneffektive und effiziente Senkung des Energieverbrauchs einer Aufzugsanlage vorzuschlagen.

Die Erfindung wird anhand der Merkmale der unabhängigen Patentansprüche gelöst. Weiterführungen sind in den abhängigen Ansprüchen angegeben.

Ein Kern der Erfindung besteht darin, dass von einer Steuereinheit einer Aufzugsanlage in einem Gebäude mit mehreren Stockwerken jeweils ein Energieverbrauchswert der Aufzugsanlage für die Anfahrt von einem derzeitigen Haltestockwerk einer Aufzugskabine der Aufzugsanlage zu jeweils mindestens einem eingegebenen Ziel- und jeweils zu mindestens einem eingegebenen Fahrtanfragestockwerk ermittelt wird. Dabei wird dasjenige Ziel- oder Fahrtanfragestockwerk von der Aufzugskabine angefahren, bei welchem der mindestens eine Energieverbrauchswert der Aufzugsanlage minimal ist.

Die Aufzugskabine wird zwischen den mehreren Stockwerken verfahren. Auf zumindest zwei Stockwerken ist je eine Aufzugsbedieneinheit für die Eingabe einer Fahrtanfrage angeordnet. Selbstverständlich könnte auch auf jedem Stockwerk eine Aufzugsbedieneinheit angeordnet sein.

Das Verfahren sieht vor, dass die Steuereinheit eine Fahrtanfrage von einer auf den mindestens zwei Stockwerken angeordnete Aufzugsbedieneinheit empfängt. Entweder durch die Eingabe in die Aufzugsbedieneinheit oder durch eine Eingabe in eine die Eingabe zur Steuereinheit übermittelnde Bedieneinheit in der Aufzugskabine wird ein Zielstockwerk definiert und von der Steuereinheit wird die Eingabe ausgeführt. Die Steuereinheit empfängt somit eine Angabe zu einem Zielstockwerk. Die mindestens eine eingegebene Fahrtanfrage wird mittels eines Sammelbetrieb-Modus von der Steuereinheit ausgeführt.

Unter Sammelbetrieb-Modus wird allgemein verstanden, dass der Aufzug bzw. die Aufzugskabine während einer Aufzugsfahrt von einem Startstockwerk zu einem Zielstockwerk Zwischenhalte einlegt, damit weitere Passagiere zu- oder aussteigen können. Dieser Modus steht im Gegensatz zum so genannten Taxibetrieb bei Aufzugsanlagen, bei dem der Aufzug bzw. die Aufzugskabine vom Startstockwerk zum Zielstockwerk ohne Zwischenstopp verfahren wird.

Erfindungsgemäss wird von der Steuereinheit in Abhängigkeit der ermittelten Energieverbrauchswerte die Fahrtrichtung der Aufzugskabine gewechselt. So könnte beispielsweise die Aufzugskabine einen Stock tiefer verfahren werden, bevor sie ihre Fahrt nach oben fortsetzt. Die Aufzugskabine wird somit während einer Sammelfahrt im Sammelbetrieb-Modus nicht nur nach oben oder nur nach unten verfahren, sondern wird in Abhängigkeit von ermittelten Energieverbrauchswerten sowohl nach unten als auch nach oben verfahren. Das Fahrtschema bzw. die Fahrtkurve weist somit im Sammelbetrieb-Modus einen Zick-Zack-Kurs auf, die Aufzugkabine fährt also nicht kontinuierlich nach oben oder nach unten.

Die Energieverbrauchswerte der Aufzugsanlage können beispielsweise in Abhängigkeit der Zuladung in der Aufzugskabine, der Fahrtrichtung der Aufzugskabine etc. bestimmt bzw. ermittelt werden.

Es kann anhand der von der Steuereinheit ermittelten Energieverbrauchswerte eine Reihenfolge der anzufahrenden Ziel- und Fahrtanfragestockwerke ermittelt werden. Dabei kann die Reihenfolge derart bestimmt werden, sodass der Gesamtenergieverbrauch der Aufzugsanlage bei den anzufahrenden Ziel- und Fahrtanfragestockwerken, also der durchzuführenden Sammelfahrt im Sammelbetrieb-Modus, minimal wird. Vorstellbar im Übrigen ist auch, dass die Energieverbrauchswerte von einer zentralen Einheit in einer Servicezentrale ermittelt und an die Steuereinheit der Aufzugsanlage zur weiteren Verarbeitung, z. B. zur Bestimmung der Reihenfolge der durchzuführenden Halte betreffend die eingegebenen Ziele und Fahrtanfragen, weitergeleitet werden. Damit wird also ein Fahrtschema für die durchzuführende Sammelfahrt definiert und von der Steuereinheit ausgeführt. Dieses Fahrtschema kann beispielsweise in einer Speichereinheit, welche mit der Steuereinheit verbunden ist, gespeichert sein. Die Reihenfolge der anzufahrenden Ziel- und Fahrtanfragestockwerke kann sich selbstverständlich während einer durchgeführten Sammelfahrt ändern. Dies ist dann der Fall, wenn beispielsweise neben den bereits registrierten Zielen und Fahrtanfragen eine weitere Fahrtanfrage bei einer Aufzugsbedieneinheit auf einem Stockwerk eingegeben wird.

Erfindungsgemäss kann zusätzlich zu den Energieverbrauchswerten ein anzufahrendes Stockwerk in Abhängigkeit einer Regel ermittelt werden. Als Regel sind verschiedenste Parameter, Bedingungen, Vorgehensweisen, Intervalle etc. vorstellbar. Selbstverständlich können auch mehrere Regeln definiert und z. B. miteinander kombiniert werden. Als Regel kann z. B. eine maximale Zeit für eine Aufzugsfahrt von einem Startstockwerk zu einem Zielstockwerk eines Passagiers bestimmt werden, der sog. Servicezeit. Aber auch die Wartezeit eines Passagiers an einem Start- bzw. Fahrtanfragestock kann festgelegt werden. Auch beispielsweise die Anzahl der Fahrtrichtungswechsel, die Zeiten, bei denen keine Fahrtrichtungswechsel durchgeführt werden sollen, die maximale Zuladung der Aufzugskabine, eine Anzahl der maximal angefahrenen Stockwerke, die Uhrzeit, eine Anzahl bereits angefahrener Stockwerke etc. können als Regel verwendet werden.

Ein Vorteil ist darin zu sehen, dass der Energieverbrauch einer Aufzugsanlage nur durch Steuerung bzw. Koordinierung der auszuführenden Aufzugsfahrten gesenkt werden kann.

Ein weiterer Vorteil besteht darin, dass das Verfahren auch bei bestehenden Aufzugsanlagen angewendet werden kann, da keine baulichen Massnahmen bei den Komponenten einer Aufzugsanlage vorgenommen werden müssen. Lediglich die Steuereinheit könnte modifiziert werden müssen.

Die Erfindung wird anhand eines in den Figuren dargestellten Ausführungsbeispiels näher erläutert. Dabei zeigen
- Fig. 1: eine beispielhafte Aufzugsanlage, die gemäss des Verfahrens betrieben werden kann,
- Fig. 2: ein Beispiel eines bekannten Fahrtschemas,
- Fig. 3: ein Beispiel eines Fahrtschemas gemäss des hier beschriebenen Verfahrens und
- Fig. 4: ein weiteres Beispiel eines Fahrtschemas gemäss des hier beschriebenen Verfahrens.

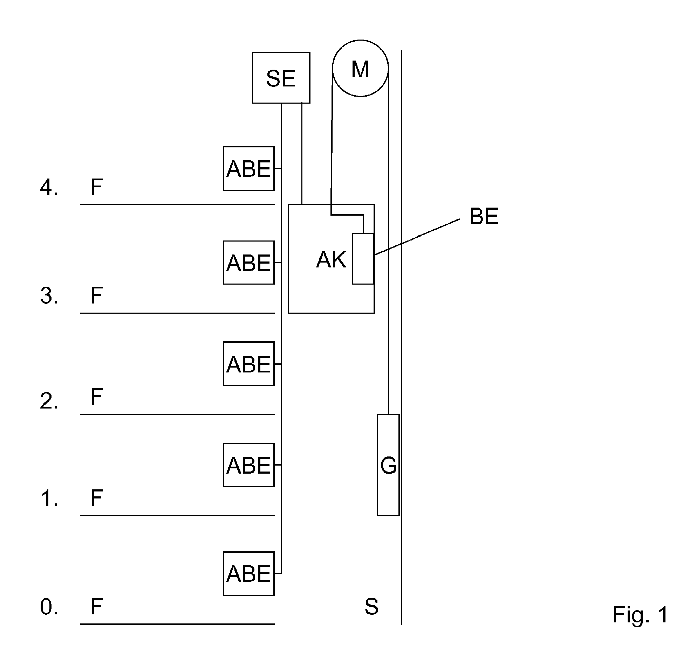

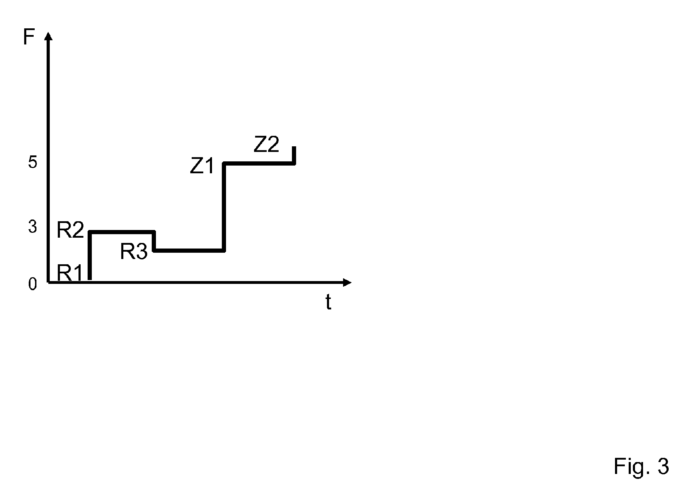

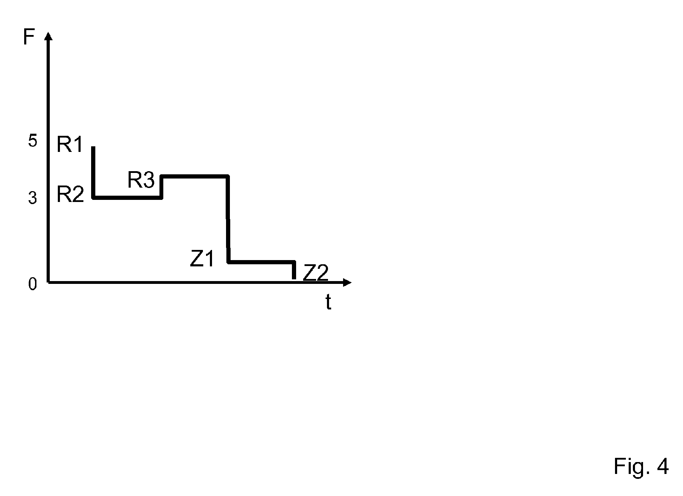

Figur 1 zeigt ein erfindungsgemässes Beispiel einer Aufzugsanlage zur Ausführung des Verfahrens gemäss der Beschreibung in den Figuren 3 und 4. In diesem Beispiel wird ein Aufzug mit Gegengewicht G verwendet. Selbstverständlich kann auch ein hydraulischer Aufzug, ein Aufzug ohne Gegengewicht etc. verwendet werden. In einem Gebäude mit mehreren Stockwerken F, 0. bis 4. Stockwerk, befindet sich eine Aufzugskabine AK mit einem Gegengewicht G und einem Antrieb M in einem Schacht S. Die Aufzugskabine AK weist eine Bedieneinheit BE zur Eingabe eines Zielstockwerkes Z auf. In diesem Beispiel weist jedes Stockwerk F eine Aufzugsbedieneinheit ABE auf, die über ein geeignetes Kommunikationsnetz, leitungsgebunden oder leitungsungebunden, mit einer Steuereinheit SE verbunden sind. Auch die Bedieneinheit BE in der Aufzugskabine AK ist über ein Kommunikationsnetz, sei es über ein eigenes oder dasselbe Kommunikationsnetz wie die Aufzugsbedieneinheit ABE, mit der Steuereinheit SE verbunden.

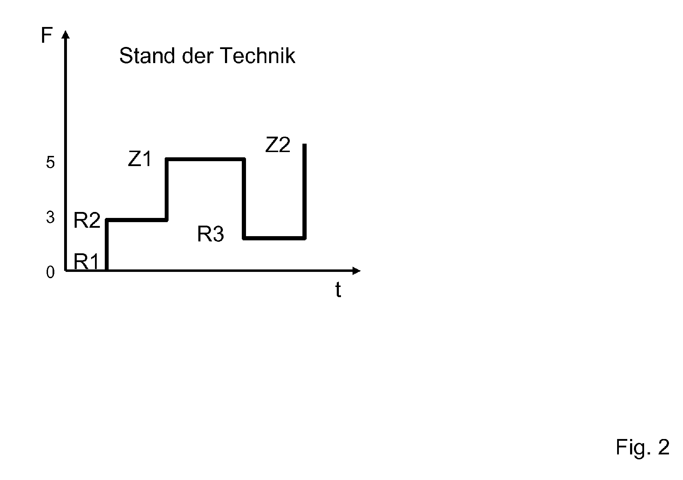

Figur 2 zeigt ein Beispiel eines bekannten Fahrtschemas bei einer Sammelfahrt in einem Sammelbetrieb-Modus. Beim Fahrtschema sind die angefahrenen Stockwerke F als Funktion der Zeit t aufgetragen. Die Aufzugsfahrt bzw. die Sammelfahrt beginnt in diesem Beispiel im Erdgeschoss F, dem 0. Stockwerk zur Zeit t, aufgrund einer in eine Aufzugsbedieneinheit ABE eingegebene und an eine Steuereinheit SE weitergeleitete Fahrtanfrage R1 und soll im 5. Stockwerk, dem Zielstockwerk Z1, enden. Aufgrund einer weiteren Fahrtanfrage R2 im 3. Stockwerk veranlasst die Steuereinheit SE einen Zwischenstopp der Aufzugskabine AK auf diesem Fahrtanfragestockwerk F. Die im 3. Stockwerk angefragte Fahrt soll ebenfalls im 5. Stockwerk enden. Noch eine weitere Fahrtanfrage R3 von einer auf dem 2. Stockwerk befindlichen Aufzugsbedieneinheit ABE wird registriert. Da sich dieses Fahrtanfragestockwerk, 2. Stockwerk, unterhalb des aktuellen Haltestockwerks befindet, wird diese Fahrtanfrage R3 erst einmal von der Steuereinheit SE ignoriert und von der Aufzugskabine AK das Zielstockwerk Z1 der beiden anderen Fahrtanfragen R1, R2, dem 5. Stockwerk, angefahren. Dort angekommen steigen die Passagiere aus der Aufzugskabine AK aus.

Die bis jetzt von der Steuereinheit SE ignorierte Fahrtanfrage R3 wird nun verarbeitet. Dazu verfährt die Aufzugskabine AK leer zum Fahrtanfragestockwerk, dem 2. Stockwerk, damit sie die die Fahrt anfordernden Passagiere zum 6. Stockwerk, dem Zielstockwerk Z2 dieser Fahrtanfrage R3, bringen kann.

Es sei bemerkt, dass die Eingabe eines Zielstockwerks Z entweder über die Aufzugsbedieneinheit ABE oder über einer Bedieneinheit BE in der Aufzugskabine AK geschehen kann.

Die in die Aufzugsbedieneinheit ABE eingegebene Fahrtanfrage R1, R2, R3 und das eingegebene Zielstockwerk Z1, Z2, wobei diese Eingabe des Zielstockwerks Z1, Z2 entweder in die Aufzugsbedieneinheit ABE oder in eine Bedieneinheit BE in einer Aufzugskabine AK erfolgt, werden an die Steuereinheit SE der Aufzugsanlage übermittelt, damit die Steuereinheit SE die Anfrage und die Eingabe des Zielstockwerks verarbeiten und ausführen kann.

Figur 3 zeigt ein Beispiel eines erfindungsgemässen Fahrtschemas. Wieder startet die Sammelfahrt zur Zeit t im Erdgeschoss, dem 0. Stockwerk, mit einer Fahrtanfrage R1, welche in eine Aufzugsbedieneinheit ABE eingegeben und an die Steuereinheit SE übermittelt wurde. Wieder macht die Aufzugskabine AK aufgrund einer weiteren Fahrtanfrage R2 einen Zwischenstopp auf dem 3. Stockwerk. Wieder wird noch eine weitere in eine Aufzugsbedieneinheit ABE im 2. Stockwerk eingegebene Fahrtanfrage R3 von der Steuereinheit SE registriert.

Diesmal bestimmt die Steuereinheit SE jedoch nun jeweils mindestens einen Energieverbrauchswert der Aufzugsanlage für die Anfahrt vom derzeitigen Haltestockwerk, beispielsweise dem 3. Stockwerk, der Aufzugskabine AK zu jeweils dem Fahrtanfragestockwerk R3, in diesem Beispiel das 2. Stockwerk, und jeweils zu den Zielstockwerken Z1, Z2, in diesem Beispiel das 5. und das 6. Stockwerk.

Dasjenige Ziel- oder Fahrtanfragestockwerk Z1, Z2, R3 wird nun angefahren, bei welchem der mindestens eine Energieverbrauchswert der Aufzugsanlage minimal ist. In diesem Beispiel ist der Energieverbrauchswert der Aufzugsanlage bei einer Anfahrt zum 2. Stockwerk minimal. Es findet also ein Fahrtrichtungswechsel statt, bevor die Sammelfahrt nach oben zu den Zielstockwerken Z1, Z2, zum 5. und 6. Stockwerk, fortgesetzt wird. Durch die Ausführung der Fahrtanfrage R3 auf dem 2. Stockwerk und des damit verbundenen Fahrtrichtungswechsels kann auf einfache und effiziente Weise der Energieverbrauch der Aufzugsanlage minimiert werden.

Die Energieverbrauchswerte können dabei in Abhängigkeit der Zuladung in der Aufzugskabine AK, der Fahrtrichtung der Aufzugskabine AK etc. bestimmt werden. Als Zuladung kann sowohl die derzeitige in der Aufzugskabine AK existierende Last als auch die geschätzte zusätzliche Zuladung aufgrund des Zustiegs von Passagieren auf einem Fahrtanfragestockwerk R1, R2, R3 verwendet werden.

Die Bestimmung der Energieverbrauchswerte kann mit verschiedenen Verfahren, wie zum Beispiel im Liftreport-Artikel "Bewertung der Umweltverträglichkeit von Aufzügen im Laufe ihrer Nutzungsdauer" 03/2010 beschrieben ist, erfolgen. So kann zum Beispiel der Energieverbrauch für eine repräsentative Fahrt bestimmt werden. Dabei werden Einzelenergieverbrauchswerte, wie zum Beispiel für eine Aufwärtsfahrt zur höchsten Haltestelle, eine Abwärtsfahrt zur unteren Haltestelle und der jeweilige Türbetrieb (öffnen und schliessen), berechnet. Anhand der Einzelenergieverbrauchswerte kann dann der Energieverbrauch anderer Fahrten bestimmt werden. Unter Einbeziehung eines Verkehrsmusters einer Aufzugsanlage kann der Gesamtenergieverbrauch einer Aufzugsanlage bestimmt werden. Auch kann der Energieverbrauch einer Aufzugsanlage anhand von Verbrauchsmessungen für jede mögliche Fahrt oder auf Grundlage von vereinfachten Energie-Modellen bestimmt werden.

Es ist vorstellbar, dass von der Steuereinheit SE aufgrund der ermittelten Energieverbrauchswerte eine Reihenfolge der anzufahrenden Ziel- und Fahrtanfragestockwerke Z1, Z2, R1, R2, R3 ermittelt wird. Dabei kann die Reihenfolge der anzufahrenden Ziel- und Fahrtanfragestockwerke Z1, Z2, R1, R2, R3 derart bestimmt werden, sodass der Gesamtenergieverbrauch der Aufzugsanlage minimal bzw. gesenkt wird. Die Reihenfolge kann in Form einer Liste, Tabelle etc. in einer Speichereinheit gespeichert werden, welche in den Figuren nicht gezeigt ist. Die Speichereinheit ist dabei mit der Steuereinheit SE verbunden und dabei entweder in der Steuereinheit integriert oder separiert von ihr (SE). Die bestimmte Reihenfolge kann entweder statisch einmal vor der Sammelfahrt bestimmt und von der Steuereinheit SE entsprechend ausgeführt werden oder sie kann während des Betriebes der Aufzugsanlage dynamisch verändert werden.

Es ist auch vorstellbar, dass eine zentrale Einheit, zum Beispiel in einer ServiceZentrale, die Energieverbrauchswerte der Aufzugsanlage bestimmt und der Steuereinheit SE zur weiteren Verarbeitung bzw. zur Ausführung übermittelt.

Zusätzlich zu den Energieverbrauchswerten können die anzufahrenden Ziel- und/oder Fahrtanfragestocke Z1, Z2, R1, R2, R3 in Abhängigkeit einer Regel von der Steuereinheit SE ermittelt werden. Als Regel können grundsätzliche sämtliche Parameter, Bedingungen, Intervalle etc. verwendet werden, die einen effizienten Aufzugsbetrieb gewähren können. So kann zum Beispiel ein Wert bzw. ein Intervall für eine Servicezeit bestimmt werden. Unter Servicezeit ist die Ausführungszeit einer angefragten Aufzugsfahrt, von Fahrtanfragestockwerk R1, R2, R3 zum Zielstockwerk Z1, Z2, gemeint. Diese erhöht sich im Allgemeinen, wenn zusätzliche Fahrtanfragestockwerke von der Aufzugskabine AK angefahren werden. Auch die minimale und/oder maximale Wartezeit eines Passagiers auf einem Fahrtanfragestockwerk könnte gemäss einer Regel definiert werden. Als Regeln in Bezug auf den Fahrtrichtungswechsel könnten zum Beispiel die Anzahl der maximalen Fahrtrichtungswechsel, Bedingungen wann keine Fahrtrichtungswechsel ausgeführt werden etc. angeben werden. So könnte eine Bedingung die Uhrzeiten, zum Beispiel die Hauptverkehrszeiten in einem Gebäude, angeben, bei denen kein Fahrtrichtungswechsel von der Aufzugsanlage durchgeführt werden soll. Eine weitere Bedingung könnte zum Beispiel Prioritätsfahrten regeln. Auch minimale und/oder maximale Zuladungswerte in die Aufzugskabine AK könnten als Regel verwendet werden. So könnten zum Beispiel die Zuladung in die Aufzugskabine AK derart geregelt werden, dass der Energieverbrauch der Aufzugsanlage aufgrund der Zuladungsverwaltung gesenkt werden kann. Ein weiteres Beispiel für eine Regel kann sein, dass die minimale und/oder maximale Anzahl der anzufahrenden Ziel- und/oder Fahrtanfragestockwerke Z1, Z2, R1, R2, R3 innerhalb einer Sammelfahrt bestimmt wird.

Figur 4 zeigt ein weiteres Beispiel eines erfindungsgemässen Fahrtschemas. In diesem Beispiel ändert die Aufzugskabine AK die Fahrrichtung vom 3. Stockwerk zum 4. Stockwerk aufgrund günstigere bzw. minimalen Energieverbrauchswerte, damit sie (AK) eine Fahrtanfrage R3 ausführen kann. Danach werden die Passagiere in der Aufzugskabine AK zu ihren Zielstockwerken Z1, Z2 im 1. Stockwerk und Erdgeschoss gebracht. Ansonsten wird das Verfahren verwendet, wie es in Figur 3 beschrieben ist.

## Patentansprüche

1. Verfahren zum Betreiben einer mindestens eine Steuereinheit (SE) umfassende Aufzugsanlage in einem Gebäude mit mehreren Stockwerken in einem Sammelbetrieb-Modus, wobei von der Steuereinheit (SE) mindestens eine Fahrtanfrage (R1, R2, R3) und mindestens eine Angabe zu einem Zielstockwerk (Z1, Z2) empfangen wird, **dadurch gekennzeichnet,**
**dass** von der Steuereinheit (SE) jeweils ein Energieverbrauchswert der Aufzugsanlage für eine Anfahrt von einem derzeitigen Haltestockwerk (F, Z1, Z2, R1, R2, R3) einer Aufzugskabine (AK) der Aufzugsanlage zu jeweils dem mindestens einen eingegebenen Ziel- (Z1, Z2) und jeweils zu dem mindestens einen eingegebenen Fahrtanfragestockwerk (R1, R2, R3) ermittelt wird,
**dass** aus den ermittelten Energieverbrauchswerten ein minimaler Energieverbrauchswert für eine Aufzugsfahrt bestimmt wird und
**dass** dasjenige Ziel- (Z1, Z2) oder Fahrtanfragestockwerk (R1, R2, R3) mit dem minimalen Energieverbrauchswert angefahren wird.

2. Verfahren nach Anspruch 1,
**dadurch gekennzeichnet,**
**dass** in Abhängigkeit der ermittelten Energieverbrauchswerte eine Fahrtrichtung der Aufzugskabine (AK) von der Steuereinheit (SE) gewechselt wird.

3. Verfahren nach einem der vorangegangenen Ansprüche,
**dadurch gekennzeichnet,**
**dass** die Energieverbrauchswerte in Abhängigkeit einer Zuladung in der Aufzugskabine (AK) und/oder einer Fahrtrichtung der Aufzugskabine (AK) bestimmt werden.

4. Verfahren nach einem der vorangegangenen Ansprüche,
**dadurch gekennzeichnet,**
**dass** anhand der von der Steuereinheit (SE) ermittelten Energieverbrauchswerte eine Reihenfolge der anzufahrenden Ziel- (Z1, Z2) und Fahrtanfragestockwerke (R1, R2, R3) ermittelt wird.

5. Verfahren nach Anspruch 4,
**dadurch gekennzeichnet,**
**dass** die Reihenfolge der anzufahrenden Ziel- (Z1, Z2) und Fahrtanfragestockwerke (R1, R2, R3) derart bestimmt wird, sodass der Gesamtenergieverbrauch der Aufzugsanlage minimal wird.

6. Verfahren nach einem der vorangegangenen Ansprüche,
**dadurch gekennzeichnet,**
**dass** zusätzlich zu den Energieverbrauchswerten in Abhängigkeit einer Regel ein anzufahrendes Ziel- (Z1, Z2) oder Fahrtanfragestockwerk (R1, R2, R3) von der Steuereinheit (SE) ermittelt wird.

7. Verfahren nach Anspruch 6,
**dadurch gekennzeichnet,**
**dass** als Regel eine Angabe zu einer Servicezeit, einer Wartezeit, eines Fahrtrichtungswechsels, eines Zuladungswertes bei der Aufzugskabine (AK), einer Anzahl bereits angefahrener Ziel- (Z1, Z2) oder Fahrtanfragestockwerke (R1, R2, R3) und/oder einer Uhrzeit verwendet wird.

8. Aufzugsanlage mit einer Steuereinheit (SE) und mindestens einer Aufzugskabine (AK) in einem Gebäude mit mehreren Stockwerken (F), wobei die Aufzugskabine (AK) zwischen den mehreren Stockwerken (F) vertikal verfahrbar ist, wobei auf mindestens zwei Stockwerken (F) eine Aufzugsbedieneinheit (ABE) angeordnet ist, wobei die Steuereinheit (SE) eine in die Aufzugsbedieneinheit (ABE) eingegebene Fahrtanfrage (R1, R2, R3) von mindestens einer Aufzugsbedieneinheit (ABE) empfängt, wobei entweder durch eine Eingabe in die Aufzugsbedieneinheit (ABE) oder durch eine Eingabe in eine die Eingabe zur Steuereinheit (SE) übermittelnde Bedieneinheit (BE) in der Aufzugskabine (AK) ein Zielstockwerk (Z1, Z2) definiert ist, wobei die Steuereinheit (SE) das mindestens eine eingegebene Fahrtziel (Z1, Z2) und die mindestens eine eingegebene Fahrtanfrage (R1, R2, R3) mittels eines Sammelbetrieb-Modus ausführt,
**dadurch gekennzeichnet,**
**dass** die Steuereinheit (SE) jeweils mindestens einen Energieverbrauchswert der Aufzugsanlage für die Anfahrt von einem derzeitigen Haltestockwerk (F, Z1, Z2, R1, R2, R3) der Aufzugskabine (AK) zu jeweils mindestens einem eingegebenen Ziel-(Z1, Z2) und jeweils mindestens einen eingegebenen Fahrtanfragestockwerk (R1, R2, R3) ermittelt und
**dass** die Steuereinheit (SE) dasjenige Ziel- (Z1, Z2) oder Fahrtanfragestockwerk (R1, R2, R3) zur Anfahrt auswählt, bei welchem der mindestens eine Energieverbrauchswert der Aufzugsanlage minimal ist.
